# EUROPÄISCHE PATENTSCHRIFT

(11) **EP 1 559 595 B1**
(45) Veröffentlichungstag und Bekanntmachung des Hinweises auf die Patenterteilung: **03.06.2009**
(21) Anmeldenummer: 04002015.8
(22) Anmeldetag: 30.01.2004
(51) Int. Cl.: B60G 15/06, F16F 9/54

(54) **Federbeinstützlager mit integriertem Drehlager für die Aufhängung eines lenkbaren Fahrzeugrades**
Strut support with incorporated pivot bearing for the suspension of a steerable vehicle wheel
Support de jambe de force avec palier intégré pour la suspension d'une roue de véhicule

(43) Veröffentlichungstag der Anmeldung: 03.08.2005
(73) Patentinhaber: ContiTech Vibration Control GmbH, 30165 Hannover (DE)
(72) Erfinder: Lingner, Thomas, 30900 Wedemark (DE)
(74) Vertreter: Finger, Karsten

(56) Entgegenhaltungen:
- WO-A-01/92040
- DE-A- 10 004 945
- DE-C- 10 138 197
- FR-A- 2 793 732
- US-B1- 6 267 512

## Beschreibung

Die Erfindung betrifft ein oberes Federbeinstützlager mit integriertem Drehlager für Radaufhängungen - vorzugsweise nach Bauart McPherson - in einem Kraftfahrzeug, wie es z. B. gemäß Anspruch 1 aus der WO 01/92 040 A1 vorbekannt ist.

### Hintergrund der Erfindung und Stand der Technik

Federbeine, die aus der Kombination einer Tragfeder und einem darin integrierten Stoßdämpfer (= McPherson) bestehen, stellen zwischen Fahrzeug-Rad und -Aufbauten angeordnete Verbindungsglieder dar.

Die Anbindung an die Kraftfahrzeugkarosserie erfolgt durch ein kopfseitig an das Federbein angebrachtes Federbeinstützlager. Gummi/Metall-Lager in den verschiedensten Ausführungen übertragen Feder- und Stoßdämpferkräfte in die Karosserie und ermöglichen Relativbewegungen in Abhängigkeit von den Gummielastizitäten. Kippbewegungen rufen in den Bauteilen der Federbeine Reaktionsmomente hervor. Im Stoßdämpfer bewirken diese Reaktionsmomente Biegebeanspruchung und erhöhte Reibung, wodurch Komfort und Betriebsfähigkeit negativ beeinflusst werden. Zur Ermöglichung einer Drehbewegungen, die beim Lenken von lenkbaren Rädern entstehen, weist das Federbeinstützlager ein Drehlager auf. Dieses Drehlager ist als Wälzlager ausgebildet, wobei statt Kugeln auch Nadeln oder Kegel zum Einsatz gelangen können. Außer der Ermöglichung einer Drehbewegung hat solch ein Federbeinstützlager mit integriertem Drehlager drei verschiedene Kräfte aufnehmen zu können, die durch:
a) Kolbenstange des Stoßdämpfers mit axialen und radialen Kraftkomponenten,
b) Tragfeder des Federbeins mit axialen und radialen Komponenten,
c) Anschlagpuffer, soweit vorhanden, mit im Wesentlichen nur *axialen* Komponenten,
übertragen werden. Diese verschiedenen Kräfte sind jeweils über geeignete "Kraftleitungen" abzuführen.
Die heute im Einsatz befindlichen und unter der Prämisse der Komfortverbesserung entstandenen entkoppelten Federbeinstützlager trennen die Kraftwege zwischen Stoßdämpfer und Tragfeder/Zusatzfeder.

Die Ableitung der Dämpferkräfte auf die Karosserie erfolgt über einen Dämpferblock bzw. über eine Dämpfermasse. Der Dämpferblock besteht üblicherweise aus einem oberen Teil, das direkt oder indirekt am Federbeindom des Fahrzeugs befestigt ist, und mit einem unteren, um ein Kugellager drehbares Teil zusammenwirkt.
Die derzeit zum Einsatz gelangenden Dämpferblock-Teile sind aus geprägten Metallblechen hergestellt, die in einer Kautschuk-Masse gelagert sind, wobei die (topfförmigen) Metallbleche nicht aufvulkanisiert sondern eingedrückt sind.
1. Um die relativ große Anzahl und die Verschiedenheit der diversen Materialien der zum Aufbau eines Federbeinstützlagers erforderlichen Teile zu verringern, wird gemäß der internationalen Patentanmeldung WO 01/92 040 Alvorgeschlagen, die aus Metall und aufvulkanisiertem Gummi bestehenden Teile des Dämpferblocks durch Verwendung von thermoplastischem Material zu vereinfachen. Das zwischen oberem Teil und Dämpferstange verbleibende Volumen wird mit einem Elastomer ausgefüllt.
   Bei einer derartigen Konstruktion erscheint die Kraftübertragung vom Dämpfer auf die Fahrzeugkarosserie kaum gewährleistet. Insbesondere erscheint deren Reproduzierbarkeit und die Dauerhaftigkeit problematisch.
   Über die Befestigung des Federbeinstützlagers am Federbeindom ist aus der WO 01/92 040 A1 nichts Näheres zu entnehmen.
2. Die DE 101 38 197 C1 betrifft eine Lagerung für ein Kolben-Zylinderaggregat. Diese Lagerung besteht im Wesentlichen aus einem oberen und einem unteren Teil, die über ein Drehlager miteinander verbunden sind. Das obere Teil weist einen ringförmigen Elastomerkörper mit integriertem Blechteil auf. An der Innenseite des Elastomerkörpers sind als Tragflansche zwei topfförmige Anschlagbleche eingedrückt (nicht vulkanisiert). An einer zentralen Bohrung der Anschlagbleche ist das obere Ende der Stoßdämpferstange befestigt. Der Elastomerkörper wird durch sein integriertes Blechteil direkt mit der Karosserie verschraubt.
   Während eine Feder auslenkungsproportional reagiert, reagiert ein Stoßdämpfer geschwindigkeitsproportional. D. h.: Bei geringer Auslenkung bzw. bei Beginn einer Auslenkung ist die Rückstellkraft einer Feder äußerst gering. Ein Stoßdämpfer hingegen, der einen Stoß zu verarbeiten hat (z. B. aufgrund eines "Schlaglochs"), kann diese Stoßspitze nicht sofort verarbeiten sondern überträgt den Stoß vom Rad und Stoßdämpferzylinder auf die Stoßdämpferstange.
   Der Elastomerkörper wird durch drei Schrauben fest mit der Karosserie verschraubt. Hierdurch wird eine universelle Einsatzbereitschaft des Federbeinstützlagers eingeschränkt, da einige Kraftfahrzeughersteller nur *einen* (zentralen) Verschraub- bzw. Befestigungsvorgang durchführen können.
3. Die DE 100 04 945 A1 zeigt einen Federbein-Lagerkörper, der im Unterschied zum Lagerkörper gemäß DE 101 38 197 C1 rotationssymmetrisch aufgebaut ist und mit Hilfe einer am Stoßdämpfer-Ende montierten Platte (Stützkörper, 14) und eines Gegenhalters unter Zwischenschaltung von ringförmigen Gummipuffern eine zum Fahrzeugchassis rundum entkoppelte Befestigung ermöglicht.
   Der aus elastomerem Material bestehende Lagerkörper ist mit mehreren Stütz- und Versteifungselementen verstärkt. Die diversen Stütz- und Versteifungselemente machen den Lagerkörper aufwendig und damit teuer in der Herstellung.
   Durch den in einen zweiten Pufferabschnitt integrierten Stützkörper wird dieser erheblich steifer (Sp. 3, Z. 24), so dass eine Ableitung der vom Dämpfer herrührenden Dämpferkräfte nur unzulänglich und völlig unkomfortabel verarbeitet werden kann.

Schließlich ist nichts darüber ausgesagt, wie der Randabschnitt (27) des Innentopfes (25) + (26) am Lagerkörper (6) befestigt ist.

### Aufgabe der Erfindung

Die Aufgabe der vorliegenden Erfindung besteht deshalb in der Schaffung einer einfachen, praktikablen Lagerkonstruktion mit voneinander entkoppelten Kraftleitungswegen, wobei der zwischen Feder und Chassis gegebene Kraftleitungsweg straff und der zwischen Stoßdämpfer und Chassis gegebene Kraftleitungsweg besonders nachgiebig sein soll.

### Lösung und Vorteile

Diese Aufgabe wird im Wesentlichen mit den Merkmalen des Hauptanspruchs gelöst. Durch die in den Unteransprüchen aufgeführten Maßnahmen sind bevorzugte Verbesserungen und Weiterbildungen möglich.

Zur Lösung der gestellten Aufgabe wurden Merkmale der drei genannten Konstruktionen in abgewandelter Form herangezogen.
Gemäß Anspruch 1 werden bei der vorliegenden Erfindung das Kernelement des Federbeinstützlager und das obere Gehäuseteil des Kugellagers miteinander vereint und als ein einziges Bauteil ausgeführt. Hierdurch entsteht herstellbedingt nur noch ein einziges Gesamtbauteil.
Das neue Kernelement besteht sinnvoller Weise aus verstärktem Kunststoff. Im Unterschied zur Verwendung von gestanztem und geprägtem Blech ergeben sich bei Verwendung von Kunststoff kaum gestalterische Einschränkungen.
Das aus erstem und zweitem Abschnitt bestehende erste Gummiteil ist gegenüber dem Stoßdämpfer weich ausgebildet, so dass Stöße von Fahrbahn-Unebenheiten weich abgefangen werden können.
Dadurch, dass das als Gummiauflage dienende erste Gummiteil auf das gerippte obere Bauteil (Kernelement) angepasst ist, erfolgt eine spielfreie Positionierung des Lagers im Federbeindom der Karosserie.

### Zeichnungen

Das erfindungsgemäße Federbeinstützlager wird anhand eines Ausführungsbeispiels erläutert. Es zeigt:
Fig. 1 das obere Ende eines im Längsschnitt dargestellten Federbeins mit einer bevorzugten Ausführungsform des Federbeinstützlagers;
Fig. 2 den Querschnitt AA'.

### Beschreibung

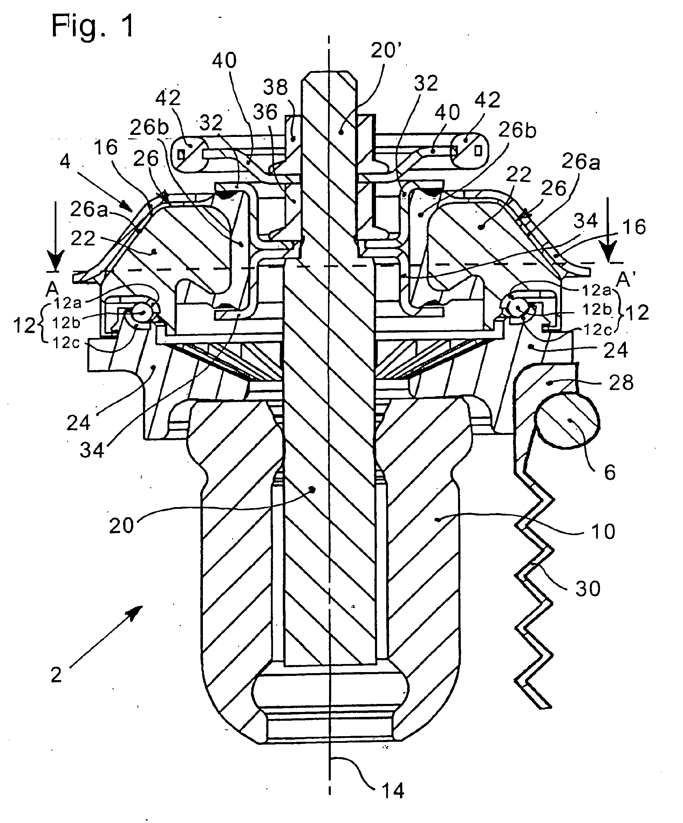

Das in Fig. 1 ausschnittsweise dargestellte Federbein 2 ist kopfseitig mit einem Federbeinstützlager 4 versehen.
Das Federbein 2 selbst besteht im Wesentlichen aus einer Tragfeder 6 und einem koaxial dazu angeordneten Stoßdämpfer mit einer Kolbenstange 20. Im vorliegenden Ausführungsbeispiel ist das Federbein 2 mit einer als Anschlagpuffer dienenden Zusatzfeder 10 versehen.
Das kopfseitig an dem Federbein 2 angebrachte Federbeinstützlager 4 dient als Verbindungsglied zwischen Federbein 2 und Fahrzeugaufbau. Zwecks Zentrierung des mit dem Federbeinstützlager 4 versehenen Federbeins 2 an dem Fahrzeugaufbau ist die Karosserie des Fahrzeugs im Befestigungsbereich mit einer Einbuchtung ("Federbeindom") 16 versehen.
Da das Federbein 2 zur Abstützung der Aufbauten eines Kraftfahrzeugs gegenüber einem lenkbaren Rad vorgesehen ist, weist das Federbeinstützlager 4 ein Wälzlager 12 auf, wodurch die Feder 6 gegenüber der Federbein-Achse 14 verdrehbar ist.

Zur Abstützung der Fahrzeugaufbauten sind für die Tragfeder 6, die Zusatzfeder 10 (bzw. den Anschlagpuffer) und den Stoßdämpfer 8 drei Kraftleitungswege vorgesehen, wobei die Kraftleitungswege von Tragfeder 6 und Zusatzfeder 10 wegen des gemeinsamen Erfordernisses der axialen Drehbarkeit als weitgehend zusammengefasst angesehen werden können.

Da bei dem Stoßdämpfer die erforderliche Drehbarkeit bereits zwischen Stoßdämpfer-Zylinder und Stoßdämpfer-Kolben bzw. Stoßdämpfer-Stange 20 gegeben ist, wird von der Stoßdämpfer-Stange 20 zum Fahrzeugaufbau ein separater Kraftweg realisiert.

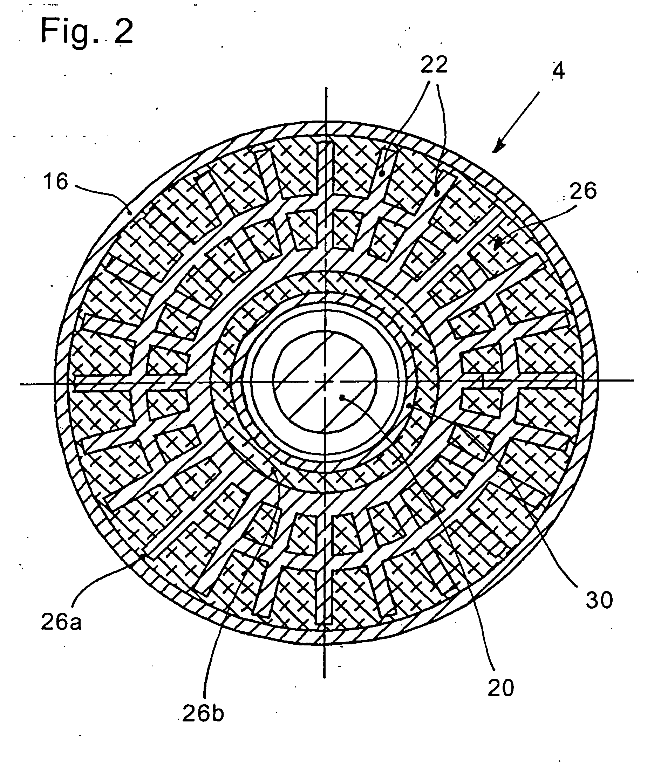

Um die Herstell- und Montagekosten der Stützlager-Einzelteile in Grenzen zu halten, sind erfindungsgemäß die den Federkraftweg bestimmenden Teile zu zwei Bauteilen zusammengefasst, nämlich einem oberen Teil (Kernelement) 22 und einem unteren Teil 24, die mittels des kreisringförmigen Wälzlagers 12 axial gegeneinander verdrehbar sind. Das Wälzlager 12 besteht aus Wälzkörpern (hier Kugeln 12b) sowie oberer 12a und unterer gehärteter Laufbahn 12c, die in die Bauteile 22 eingesetzt sind. Oberes 22 und unteres Teil 24 bestehen aus verstärktem Kunststoff. Damit gibt es keinerlei Probleme, den Bauteilen 22, 24 eine gewünschte Gestalt zu geben. Zwecks Materialeinsparung ist insbesondere das Oberteil 22 radial gerippt ausgebildet (vgl. Querschnitt, Fig. 2).

Zwischen Oberteil 22 und Federbeindom 16 ist ein (erstes) Gummiteil 26 zwischengeschaltet. Wegen der radial gerippten Gestltung des oberen Teils 22 ergibt sich bei Anwendung von Drehmomenten eine zuverlässige Ineingriffnahme zwischen oberem Teil 22 und (erstem) Gummiteil 26. Zwischen Unterteil 24 und Tragfeder 6 ist als ein zweites Gummiteil das verdickte Ende 28 eines Schutz/Schmutzbalges 30 eingefügt.

Das erste Gummiteil 26 besteht aus zwei, konzentrisch zueinander angeordneten Abschnitten 26a, 26b, wobei der erste Abschnitt 26a zur Abstützung und Abstimmung der Tragfeder 6 dient, und wobei der zweite Abschnitt 26b mit dem ersten Abschnitt 26a in Serie geschaltet zur Abstützung der Dämpferstange 20 gegenüber den Fahrzeugaufbauten dient. Der zweite, von dem oberen Teil (Kernelement) 22 zur Dämpferstange 20 gerichtete Abschnitt 26b wird von den Außenrändern zweier Tragflansche 32, 34 umfasst. Die Tragflansche 32, 34 weisen die Gestalt zweier, tiefgezogener und gegeneinander angeordneter Töpfe auf. Zur endseitigen Aufnahme der Dämpferstange 20 sind die Tragflansche 32, 34 in ihrer Mitte durchbohrt. Die Befestigung der Tragflansche 32, 34 erfolgt mittels zweier Muttern 36 und 38 auf das mit Schraubgewinde versehene Ende 20' der Dämpferstange 20.

Zur kopfseitigen Befestigung des Federbeins 2 an der Fahrzeugkarosserie wird das obere Ende 20' der Dämpferstange 20 durch eine hierfür im Federbeindom 16 vorgesehene Öffnung gesteckt und mit Hilfe eines Gegenhalters (Außenmetall) 40 arretiert. Der Gegenhalter 40 ist mit einem kreisringförmigen Puffer 42 versehen und wird mittels der Mutter 38 auf die Mutter 36 verspannt.

Wie aus dem in Fig. 2 dargestellten Querschnitt ersichtlich, ist das Federbeinstützlager 4 rotationssymmetrisch ausgebildet. Darüber hinaus ist aus der Darstellung zu entnehmen, dass das aus verstärktem Kunststoff bestehende Kernelement 22 gerippt ist, wobei die Zwischenräume zwischen Rippen mit elastomerem Material ausgefüllt sind und das "erste" Gummiteil 26 bilden.
Der der Tragfeder 6 zugeordnete Bereich 26a des Gummiteils 26 und der der Kraftleitung vom bzw. zum Stoßdämpfer (Stoßdämpferstange 20) zugeordnete Bereich 26b sind räumlich und funktional voneinander getrennt.

Die weiteren Bezugszeichen sind ebenfalls identisch mit denen der Fig. 1. Und zwar bedeutet "16" den Federbeindom, "30" den "untere" Tragflansch und "20" die Dämpferstange.

### Bezugszeichenliste

- 2: Federbein
- 4: Federbeinstützlager
- 6: Tragfeder
- 10: Zusatzfeder (Anschlagpuffer)
- 12: Drehlager, Wälzlager
- 14: Federbein-Achse
- 16: Federbeindom
- 20: Stoßdämpfer-Stange, Stange des Stoßdämpfers
- 20': Ende der Dämpferstange 20
- 22: "oberes" Teil (Kernelement), "oberes" Bauteil
- 24: "unteres" Teil, "unteres" Bauteil
- 26: (erstes) Gummiteil
- 26a: äußerer Abschnitt des (ersten) Gummiteils
- 26b: innerer Abschnitt des (ersten) Gummiteils
- 28: verdicktes Ende eines Schutz/Schmutzbalges, (zweites) Gummiteil
- 30: Schutz/Schmutzbalg
- 32: "oberer" Tragflansch
- 34: "unterer" Tragflansch
- 36, 38: Mutter
- 40: Gegenhalter, Außenmetall
- 42: Puffer

## Patentansprüche

1. Federbeinstützlager (4) mit integriertem Drehlager (12),
für ein aus Tragfeder (6), Stoßdämpfer und Zusatzfeder (10) bestehendes Federbein (2) - insbesondere nach Bauart McPherson -
zur Abstützung der Aufbauten eines Kraftfahrzeugs an einem lenkbaren Rad, mit folgenden Merkmalen:
- das Federbeinstützlager (4) weist einen Dämpferblock auf;
der Dämpferblock besteht aus einem "oberen" Teil (Kernelement, 22), das sich an einem Federbeindom (16) des Kraftfahrzeuges abstützt;
- das "obere" Teil (Kernelement, 22) wirkt mit einem "unteren", um das Drehlager (12; 12a, 12b, 12c) drehbaren Teil (24) zusammen;
- zusammen dienen beide Teile (22, 24) zur Abstützung der Tragfeder (6);
- das "obere" (22) und das "untere" Teil (24) bestehen aus thermoplastischen Material und sind kreisringförmig um die Stange (20) des Dämpfers (8) angeordnet;
- die sich gegenüberstehenden Flächen von "oberem" (22) und "unterem" Teil (24) weisen Aussparungen zur Aufnahme der Laufflächen (12a, 12c) des Drehlagers (12) auf;
- oberhalb und an der radial inneren Seite des "oberen" Teils (22) befindet sich ein konzentrisch hierzu angeordnetes, erstes Gummiteil (26);
- das erste Gummiteil (26) besteht aus zwei, konzentrisch zueinander angeordneten Abschnitten (26a, 26b);
**gekennzeichnet durch** folgenden Merkmalen:
- der erste Abschnitt (26a) ist hart abgestimmt und dient zur Abstützung der Tragfeder (6);
- der zweite Abschnitt (26b) ist weich abgestimmt, mit dem ersten Abschnitt (26a) in Serie geschaltet und dient zur Abstützung der Dämpferstange (20) gegenüber dem Fahrzeugaufbau;
- zwischen "erstem" Gummiteil (26) und "oberem" Ende (20') der Stoßdämpferstange (20) befinden sich zwei Tragflansche ("oberer" Tragflansch, 32; "unterer" Tragflansch, 34);
- die Tragflansche (32, 34) sind rotationssymmetrisch ausgebildet und weisen mittig jeweils eine Bohrung zur endseitigen Aufnahme der Dämpferstange (20) auf, an der die Tragflansche (32, 34) befestigt sind;
- die Außenränder der Tragflansche (32, 34) umgreifen und stützen sich an dem ersten Gummiteil (26) ab;
- die Zusatzfeder (10) steht mit dem "unteren", drehbaren Teil (24) des Stützlagers (4) in Wirkverbindung;
- zur kopfseitigen Befestigung des Federbeins (2) an der Fahrzeugkarosserie ist das obere Ende (20') der Dämpferstange (20) **durch** eine hierfür im Federbeindom (16) vorgesehene Öffnung gesteckt und mit Hilfe eines Gegenhalters (Außenmetall, 40) als einziges zentrales Bauelement arretiert;
- der Durchmesser des Gegenhalters (40) ist größer als die Öffnung im Federbeindom (16);
- der Gegenhalter (40) ist mit einem kreisringförmigen Puffer (42) versehen.

2. Federbeinstützlager nach Anspruch 1,
**dadurch gekennzeichnet,**
**dass** das "obere" Teil (22) eine gerippte Struktur aufweist.

3. Federbeinstützlager nach Anspruch 2,
**dadurch gekennzeichnet,**
**dass** der erste Abschnitt (26a) des ersten Gummiteils (26) eine gerippte Struktur aufweist, wobei die Rippung des ersten Gummiteils (26) und die im "oberen" Teil (22) befindliche Rippung zueinander kongruent geformt sind und miteinander in Eingriff stehen.

4. Federbeinstützlager nach einem der Ansprüche 1 bis 3,
**dadurch gekennzeichnet,**
**dass** das "obere" (22) und/oder das "untere", aus thermoplastischem Material bestehende Teil (24) Glasfaser-verstärkt ist (sind).

## Claims

1. Spring-strut support bearing (4) with integrated rotary bearing (12), for a spring strut (2), which is in particular of the design of a McPherson spring strut, which is composed of a supporting spring (6), shock absorber and additional spring (10) and has the purpose of supporting the structures of a motor vehicle on a steerable wheel,
having the following features:
- the spring-strut support bearing (4) has a damper block;
the damper block is composed of an "upper" part (core element 22) which is supported on a spring-strut dome (16) of the motor vehicle;
- the "upper" part (core element 22) interacts with a "lower" part (24) which can rotate about the rotary bearing (12; 12a, 12b, 12c);
- these two parts (22, 24) serve together to support the supporting spring (6);
- the "upper" part (22) and the "lower" part (24) are composed of thermoplastic material and are arranged in the form of a circular ring around the rod (20) of the damper (8);
- the surfaces of the "upper" part (22) and "lower" part (24) which lie opposite one another have recesses for receiving the running surfaces (12a, 12c) of the rotary bearing (12);
- a first rubber part (26) which is arranged concentrically with respect to the "upper" part (22) is located above and on the radially inner side of the "upper" part (22);
- the first rubber part (26) is composed of two sections (26a, 26b) which are arranged concentrically with respect to one another;
**characterized by** the following features:
- the first section (26a) is adjusted to a hard setting and serves to support the supporting spring (6);
- the second section (26b) is adjusted to a soft setting, is connected in series with the first section (26a) and is used to support the damper rod (20) with respect to the body of the vehicle;
- two supporting flanges ("upper" supporting flange 32; "lower" supporting flange 34) are located between the "first" rubber part (26) and the "upper" end (20') of the shock absorber rod (20);
- the supporting flanges (32, 34) are of rotationally symmetrical design and each have in a central position a bore for receiving the damper rod (20) at the end and to which the supporting flanges (32, 34) are attached;
- the external edges of the supporting flanges (32, 34) engage around and are supported on the first rubber part (26);
- the additional spring (10) is operatively connected to the "lower" rotatable part (24) of the support bearing (4);
- in order to attach the spring strut (2) at the head end to the bodywork of the vehicle, the upper end (20') of the damper rod (20) is plugged through an opening which is provided for this purpose in the spring-strut dome (16) and is locked as a single central component using a stay (external metal 40);
- the diameter of the stay (40) is greater than the opening in the spring-strut dome (16);
- the stay (40) is provided with a circular ring-shaped buffer (42).

2. Spring-strut support bearing according to Claim 1,
**characterized**
**in that** the "upper" part (22) has a ribbed structure.

3. Spring-strut support bearing according to Claim 2,
**characterized**
**in that** the first section (26a) of the first rubber part (26) has a ribbed structure, wherein the ribbing of the first rubber part (26) and the ribbing which is located in the "upper" part (22) are shaped congruently with respect to one another and are in engagement with one another.

4. Spring-strut support bearing according to one of Claims 1 to 3,
**characterized**
**in that** the "upper" part (22) and/or the "lower" part (24) composed of thermoplastic material is/are reinforced with fibreglass.

## Revendications

1. Palier de support de jambe de force (4) comprenant un palier rotatif intégré (12), pour une jambe de force (2) constituée d'un ressort de support (6), d'amortisseurs et d'un ressort supplémentaire (10), en particulier du type McPherson, pour le support de la carrosserie d'un véhicule automobile sur une roue dirigeable, comprenant les caractéristiques suivantes :
- le palier de support de jambe de force (4) présente un bloc amortisseur ;
- le bloc amortisseur se compose d'une partie "supérieure" (élément de noyau 22) qui s'appuie sur un dôme de jambe de force (16) du véhicule automobile ;
- la partie "supérieure" (élément de noyau 22) coopère avec une partie "inférieure" (24) pouvant tourner autour du palier rotatif (12 ; 12a, 12b, 12c) ;
- les deux parties (22, 24) servent ensemble à supporter le ressort de support (6) ;
- la partie "supérieure" (22) et la partie "inférieure" (24) se composent de matériau thermoplastique et sont disposées sous forme annulaire circulaire autour de la barre (20) de l'amortisseur (8) ;
- les surfaces opposées de la partie "supérieure" (22) et de la partie "inférieure" (24) présentent des évidements pour recevoir les surfaces de roulement (12a, 12c) du palier rotatif (12) ;
- au-dessus et du côté radialement interne de la partie "supérieure" (22) se trouve une première partie en caoutchouc (26) disposée concentriquement par rapport à celle-ci ;
- la première partie en caoutchouc (26) se compose de deux portions (26a, 26b) disposées de manière concentrique l'une par rapport à l'autre ;
**caractérisé par** les caractéristiques suivantes :
- la première portion (26a) est réglée de manière dure et sert à supporter le ressort de support (6) ;
- la deuxième portion (26b) est réglée de manière douce, est montée en série avec la première portion (26a) et sert à supporter la barre d'amortisseur (20) par rapport à la carrosserie du véhicule ;
- entre la "première" partie en caoutchouc (26) et l'extrémité "supérieure" (20') de la barre d'amortisseur (20), se trouvent deux brides de support (bride de support "supérieure" 32 ; bride de support "inférieure" 34) ;
- les brides de support (32, 34) sont réalisées avec une symétrie de révolution et présentent centralement à chaque fois un alésage pour recevoir au niveau des extrémités la tige d'amortisseur (20), à laquelle sont fixées les brides de support (32, 34) ;
- les bords extérieurs des brides de support (32, 34) viennent en prise autour de la première partie en caoutchouc (26) et s'appuient contre elle ;
- le ressort supplémentaire (10) est en liaison fonctionnelle avec la partie rotative "inférieure" (24) du palier de support (4) ;
- pour la fixation du côté de la tête de la jambe de force (2) sur la carrosserie du véhicule, l'extrémité supérieure (20') de la barre d'amortisseur (20) est enfoncée à travers une ouverture prévue à cet effet dans le dôme de jambe de force (16) et est bloquée à l'aide d'une contre-butée (métal extérieur, 40) sous forme d'élément de construction central ;
- le diamètre de la contre-butée (40) est supérieur à l'ouverture dans le dôme de jambe de force (16) ;
- la contre-butée (40) est pourvue d'un tampon amortisseur de forme annulaire circulaire (42).

2. Palier de support de jambe de force selon la revendication 1, **caractérisé en ce que**
la partie "supérieure" (22) présente une structure nervurée.

3. Palier de support de jambe de force selon la revendication 2, **caractérisé en ce que**
la première portion (26a) de la première partie en caoutchouc (26) présente une structure nervurée, les nervures de la première partie en caoutchouc (26) et les nervures se trouvant dans la partie "supérieure" (22) étant formées de manière à coïncider les unes avec les autres et étant mutuellement en prise.

4. Palier de support de jambe de force selon l'une quelconque des revendications 1 à 3, **caractérisé en ce que**
la partie "supérieure" (22) et/ou la partie "inférieure" (24) se composant de matériau thermoplastique est/sont renforcée(s) par des fibres de verre.
